# EUROPEAN PATENT APPLICATION

(11) **EP 4 773 358 A2**
(43) Date of publication of application: **08.07.2026**
(21) Application number: 26162112.2
(22) Date of filing: 17.04.2023
(51) Int. Cl.: H01M 50/105, H01M 50/186, H01M 50/129, H01M 50/121, H01M 50/119, H01M 50/342

(54) **BATTERY CELL AND MANUFACTURTING METHOD THEREOF**

(30) Priority: 18.04.2022 KR 20220047794; 14.04.2023 KR 20230049230
(62) Divisional of application: 23792125.9
(71) Applicant: LG Energy Solution, Ltd., Seoul 07335 (KR)
(72) Inventor: HWANG, Won Pill, 34122 Daejeon (KR); CHOI, Mincheol, 34122 Daejeon (KR); KIM, Shin Chul, 34122 Daejeon (KR); JEONG, Hyeok, 34122 Daejeon (KR); BAE, Sangho, 34122 Daejeon (KR)
(74) Representative: Plasseraud IP

(57) **Abstract**

The present disclosure relates to a battery cell and a manufacturing method thereof. The battery cell according to one embodiment of the present disclosure includes an electrode assembly including a cathode, an anode and a separator; and a battery case including a sealing portion that houses the electrode assembly and seals an outer periphery of the electrode assembly, wherein the sealing portion includes a first area, and a second area excluding the first area, and wherein the first area is an area where the crystallinity of the battery case is higher than that of the second area.

## Description

### [TECHNICAL FIELD]

### Cross Citation with Related Application(s)

This application claims the benefit of Korean Patent Application No. 10-2022-0047794 filed on April 18, 2022 and Korean Patent Application No. 10-2023-0049230 filed on April 14, 2023 in the Korean Intellectual Property Office, the disclosures of which are hereby incorporated by reference in their entirety.

The present disclosure relates to a battery cell and a manufacturing method thereof, and more particularly, to a battery cell which can adjust the degree of sealing of the battery case so that the user can optionally adjust the gas venting direction when the internal pressure of the battery cell increases, and a manufacturing method thereof

### [BACKGROUND]

Recently, in accordance with an increase in cost of an energy source due to exhaustion of fossil fuel and interest in environmental contamination, the demand for an eco-friendly alternative energy source has become an essential factor for future life. Therefore, research into various power generation technologies such as a nuclear power generation technology, a photovoltaic power generation technology, a wind power generation technology, a tidal power generation technology, and the like, has been continuously conducted, and a power storage device for efficiently using energy thus produced has also been interested.

Particularly, as the development of a technology and the demand for a mobile device have increased, the demand for a battery as an energy source has rapidly increased, and thus, various research into batteries capable of satisfying various requirements has been conducted.

Typically, the lithium secondary batteries, such as a lithium ion battery or a lithium ion polymer battery, which have advantages such as a high energy density, a discharge voltage, an output stability, and the like is in high demand.

In addition, the secondary battery is classified depending on a structure of an electrode assembly in which a cathode and an anode are stacked with a separator being interposed between the cathode and the anode. A representative example of the electrode assembly includes a jelly-roll type (winding type) electrode assembly having a structure in which long sheet-type cathodes and anodes are wound in a state in which a separator is interposed therebetween, a stacking type (laminate type) electrode assembly in which a plurality of cathodes and anodes cut at a predetermined size are sequentially stacked in a state in which a separator is interposed therebetween, and the like.

Further, based on the shape of battery case, the secondary battery is classified into a cylindrical battery where an electrode assembly is embedded in a cylindrical case, a prismatic battery where an electrode assembly is embedded in a prismatic case, and a pouch type battery where an electrode assembly is embedded in a pouch type case of an aluminum laminate sheet.

In the case of a pouch type battery cell, an electrode assembly stacked in the order of a separator, an anode, a separator, and a cathode is inserted into a pouch case, and then the pouch case can be sealed with an electrolyte solution, and adhesion between the separators may also be required.

A plurality of the battery cells can be connected in series/parallel to configure a battery pack. In this case, it is common to configure a battery module composed of at least one battery cell first, and then configure a battery pack by using at least one battery module and adding other components. The battery cells constituting such a middle or large-sized battery module may be secondary batteries which can be charged and discharged. During charge and discharge of such a high-output, large-capacity secondary battery, therefore, a large amount of heat is generated from the battery, whereby the electrolyte solution is vaporized, the internal pressure may increase, and the battery cell pouch may be torn.

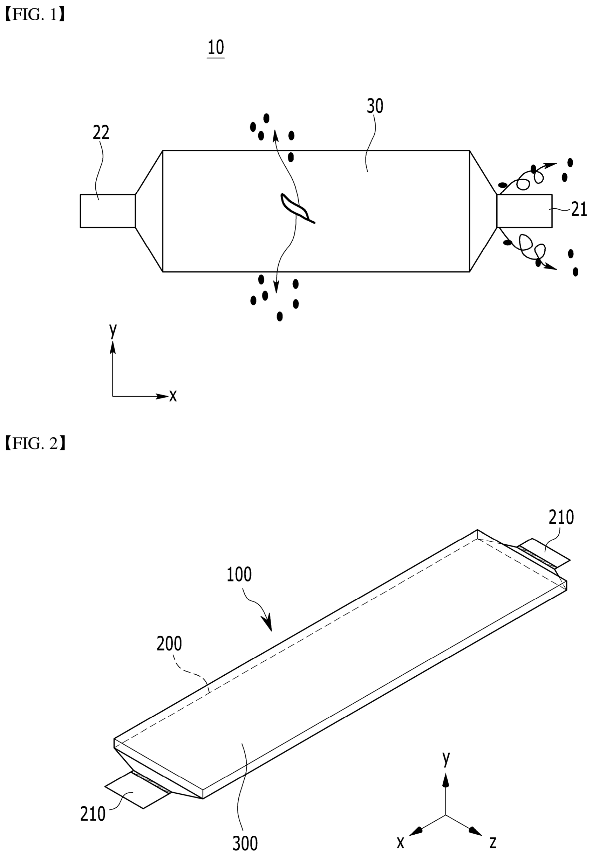

FIG. 1 is a diagram showing a state where a battery cell pouch is torn when the internal pressure of a conventional battery cell increases.

Referring to FIG. 1, the conventional battery cell 10 is configured such that the electrolyte solution is vaporized due to heat generated during the charge/discharge process, the internal pressure increases, and in this case, one area of the battery cell pouch 30 can be torn. Specifically, the battery cell pouch 30 may be torn indiscriminately without directionality. As an example, the central portion of the battery cell pouch 30 may be torn, or the area near the sealing portion where a cathode lead 21 or an anode lead 22 is located may be torn, or both portions may be torn.

In this case, high-temperature particles and gases inside the battery cell 10 are jetted out and moved to adjacent battery cells, which may cause ignition and explosion of the battery cells. Therefore, it is necessary to adjust the venting direction of particles and gas inside the battery cell 10 and thus improve the stability of the battery cell so that they are not discharged indiscriminately without directionality.

### [DETAILED DESCRIPTION OF THE INVENTION]

### [Technical Problem]

It is an object of the present disclosure to provide a battery cell that allows additional heat to irradiate to the sealing portion of the battery cell and thus change the crystallinity of the sealing portion, thereby improving safety while adjusting the venting direction, and a manufacturing method thereof.

However, the problem to be solved by the embodiments of the present disclosure is not limited to the above-described problems, and can be variously expanded within the scope of the technical idea included in the present disclosure.

### [Technical Solution]

According to one embodiment of the present disclosure, there is provided a battery cell comprising: an electrode assembly including a cathode, an anode and a separator; and a battery case including a sealing portion that houses the electrode assembly and seals an outer periphery of the electrode assembly, wherein the sealing portion includes a first area, and a second area excluding the first area, and wherein the first area is an area where the crystallinity of the battery case is higher than that of the second area.

The sealing portion may include a first sealing portion and a second sealing portion respectively located on both sides of the battery case, and a third sealing portion that is one edge between the first sealing portion and the second sealing portion.

The first area may include the first sealing portion excluding a partial area of the first sealing portion and the second sealing portion, or the first sealing portion and the second sealing portion excluding a partial area of the second sealing portion; and the third sealing portion.

The second area may be a partial area of the first sealing portion or a partial area of the second sealing portion.

When the pressure inside the battery cell is equal to or higher than a certain pressure, the second area may be torn.

The sealing portion includes a metal layer, an inner resin layer formed on one surface of the metal layer, and an outer resin layer formed on the other surface of the metal layer, the inner resin layer includes a third area, and a fourth area excluding the third area, and the third area may be an area where the crystallinity of the battery case is higher than that of the fourth area.

The third area may be an area where the crystallinity of the inner resin layer is higher than that of the fourth area.

The first area may include the third area, and the second area may include the fourth area.

According to one embodiment of the present disclosure, there is provided a battery cell comprising: an electrode assembly including a cathode, an anode and a separator; and a battery case including a sealing portion that houses the electrode assembly and seals an outer periphery of the electrode assembly, wherein the sealing portion includes a first area, and a second area excluding the first area, and wherein the first area is an area where the tensile strength of the battery case is higher than that of the second area.

The tensile strength of the first area may be 2 to 3 times higher than the tensile strength of the second area.

The tensile strength of the first area may be 2.2 to 2.9 times higher than the tensile strength of the second area.

According to one embodiment of the present disclosure, there is provided a method of manufacturing a battery cell which comprises an electrode assembly including a cathode, an anode and a separator; and a battery case including a sealing portion that houses the electrode assembly and seals an outer periphery of the electrode assembly, the method comprising: thermally fusing the sealing portion; and transferring heat to the remaining sealing portion excluding one area of the sealing portion, wherein the remaining sealing portion excluding one area of the sealing portion is a first area.

In the transferring heat to the remaining sealing portion excluding one area of the sealing portion, the first area may be an area that receives additional heat transfer from an external heat source.

The external heat source may maintain a certain distance from the battery case and transfer heat without contacting the battery case.

The external heat source may be one of a quartz tube, a carbon heater, a ceramic heater, and a halogen lamp.

The transferring heat to the remaining sealing portion excluding one area of the sealing portion may further comprise transferring heat to the first area in a first temperature range; transferring heat to the first area in a second temperature range; and cooling it.

The first temperature range may be higher than the second temperature range.

The transferring heat to the first area in a first temperature range may heat the first area to 140°C to 160°C for 1 minute.

The transferring heat to the first area in a second temperature range may heat the first area to 100°C to 120°C for 1 minute.
the cooling may cool the battery cell at 20°C to 25°C.

The method of manufacturing a battery cell according to another embodiment of the present disclosure may further comprise cutting the sealing portion.

The method of manufacturing a battery cell according to yet another embodiment of the present disclosure may further comprise folding and taping one area of the sealing portion where the electrode lead protruding from the electrode assembly is not located.

### [Advantageous Effects]

According to the embodiments, it is possible to irradiate additional heat to the sealing portion of the battery case gradually to improve the crystallinity of the sealing portion, and to impart directionality and improve the stability of the battery cell when particles and gas inside the battery cell are discharged.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a diagram showing a state in which a battery cell pouch is torn when the internal pressure of a conventional battery cell increases;
FIG. 2 is a perspective view of a battery cell according to one embodiment of the present disclosure;
FIG. 3 is an exploded perspective view of a battery cell according to one embodiment of the present disclosure;
FIG. 4 is a diagram of the battery cell according to one embodiment of the present disclosure viewed in the y-axis direction of FIG. 2;
FIG. 5 is a cross-sectional view taken along the line B-B' of FIG. 4;
FIG. 6 is a flowchart showing a method of manufacturing a battery cell according to one embodiment of the present disclosure;
FIG. 7 is a flowchart showing in more detail a process of transferring heat to the sealing portion excluding one area of the sealing portion of FIG. 6;
FIG. 8 is a flowchart showing that a step of cutting the sealing portion is further included in FIG. 6;
FIG. 9(a) is a diagram showing the peel strength of a conventional battery cell, and FIG. 9(b) is a diagram showing the peel strength of the battery cell according to one embodiment of the present disclosure;
FIG. 10 is a graph showing the tensile strength of a conventional battery cell and a battery cell according to one embodiment of the present disclosure;
FIG. 11(a) is a diagram showing the tensile strength of the cathode of a conventional battery cell, and FIG. 11(b) is a diagram showing the tensile strength of the cathode of the battery cell according to one embodiment of the present disclosure;
FIG. 12(a) is a diagram showing the tensile strength of the anode of the conventional battery cell, and FIG. 12(b) is a diagram showing the tensile strength of the anode of the battery cell according to one embodiment of the present disclosure;
FIG. 13(a) is an image showing Comparative Example in which force having a certain value or more is applied to the battery case, and FIG. 13(b) is an image showing one embodiment in which force having a certain value or more is applied to the battery case;
FIG. 14 is an image showing the inner resin layer of the battery case of Comparative Example and Example. FIG. 14(a) is an image showing an inner resin layer of a battery case of Comparative Example in which additional heat is not irradiated to the sealing portion after sealing, and FIG. 14(b) is an image showing the inner resin layer of the battery case of one embodiment of the present disclosure in which additional heat is irradiated to the sealing portion after sealing;
FIG. 15 is an image showing the outer resin layer of the battery case of Comparative Example and Example. FIG. 15 (a) is an image showing an outer resin layer of a battery case in which additional heat is irradiated to the sealing portion after sealing; and FIG. 15(b) is an image showing an outer resin layer of a battery case in which relatively lower heat than in the battery cell of FIG. 15(a) is additionally irradiated after sealing;
FIG. 16 is a diagram showing the sealing strength of a conventional battery cell and a battery cell according to one embodiment of the present disclosure; and
FIG. 17(a) is a diagram showing the pressure when the pouch of a conventional battery cell is torn, and FIG. 17(b) is a diagram showing the pressure when the pouch of the battery cell according to one embodiment of the present disclosure is torn.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, area, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

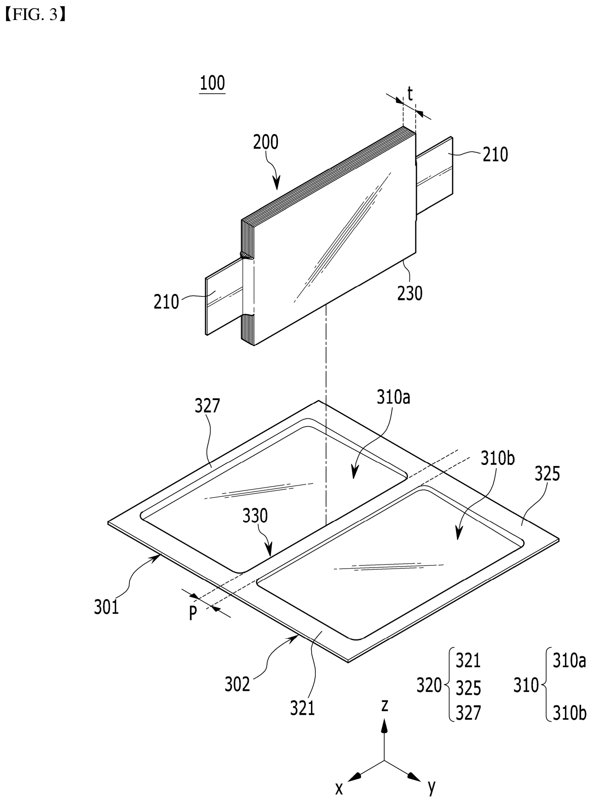

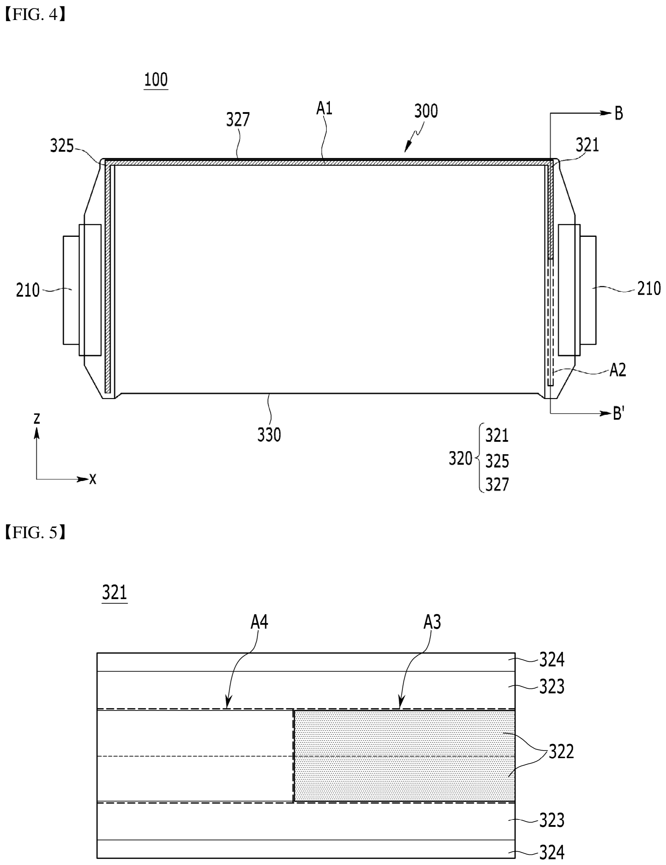

FIG. 2 is a perspective view of a battery cell according to one embodiment of the present disclosure. FIG. 3 is an exploded perspective view of a battery cell according to one embodiment of the present disclosure. FIG. 4 is a diagram of the battery cell according to one embodiment of the present disclosure viewed in the y-axis direction of FIG. 2.

Referring to FIGS. 2 to 4, the battery cell 100 according to one embodiment of the present disclosure includes an electrode assembly 200 including a cathode, an anode and a separator, an electrode lead 210 that protrudes from the electrode assembly 200, and a battery case 300 forming a housing portion 310 for housing the electrode assembly 200.

The electrode assembly 200 may be a stacked electrode assembly 200 in which a plurality of cathodes and anodes cut in units of a certain size are sequentially stacked with separators interposed therebetween. However, the electrode assembly is not limited thereto, and may be a winding type assembly configured to wind a structure in which an anode and a cathode are stacked in the state in which a separator is interposed therebetween.

The electrode lead 210 may be electrically connected to the electrode assembly 200. Such electrode leads 210 may be provided in pairs. A part of the pair of electrode leads 210 can protrude from the front and rear of the battery case 300 (both ends in the longitudinal direction of the electrode assembly, x-axis direction or -x-axis direction) to the outside of the battery case 300. The configuration of the battery cell 100 described above is an example, and the shape of the battery cell 100 can be variously modified.

The battery case 300 may include a housing portion 310, a sealing portion 320 and a folding portion 330. The battery case 300 may include a first area 301 and a second area 302 corresponding to each other. Specifically, the battery case 300 can be made of a sheet-like base material which includes a first housing portion 310a located in the first area 301, a second housing portion 310b located in the second area 302, and a folding portion 330 located between the first housing portion 300a and the second housing portion 300b.

The first area 301 and the second area 302 may be divided by a folding portion 330. The first area 301 and the second area 302 may be divided by a central area of the folding portion 330 extending in the x-axis direction.

When manufacturing the battery case 300, a housing portion 310 for housing the electrode assembly 200 may be formed in at least one of the first area 301 and the second area 302 through forming. In this figure, the housing portion 310 may include a first housing portion 310a located in the first area 301 and a second housing portion 310b located in the second area 302. A part of the electrode assembly 200 is embedded in each of the first housing portion 310a and the second housing portion 310b, and the first housing portion 310a and the second housing portion 310b are folded to face each other with the folding portion 330 interposed therebetween, thereby capable of housing the electrode assembly 200 in a wrapping manner.

After the housing portion 310 is formed, the folding portion 330 of the battery case 300 is bent by 180 degrees with respect to the center of the folding portion 330 extending in the x-axis direction to cover the housing portion 310, thereby completing the structure of the battery case 300.

The folding portion 330 may be a portion where the battery case 300 is bent. Specifically, the folding portion 330 may be a portion where the battery case 300 is bent to wrap the electrode assembly 200. The first area 301 and the second area 302 may contact corresponding to each other while being folded along the center of the folding portion 330 extending in the x-axis direction.

The electrode assembly 200 has a planar shape having four sides, and the folding portion 330 may be positioned at a portion corresponding to one of the four sides. The folding portion 330 is in close contact with one side surface 230 of the electrode assembly 200, and the sheet-like base material is folded at both edges of the folding portion 330, so that the first housing portion 310a and the second housing portion 310b can be folded so as to face each other. Accordingly, the width P of the folding portion 330 may be equal to the thickness t of the electrode assembly 200. Three sides excluding the side corresponding to the folding portion 330 form a sealing portion 320 in which the edge of the first housing portion 310a and the edge of the second housing portion 310b are mutually joined and sealed. The sealing portion 320 is sealed by a method such as thermal fusion.

More specifically, the sheet-like base material of the battery case 300 can be made of a laminated sheet including a metal layer and a resin layer. In particular, the laminated sheet may be an aluminum laminate sheet.

The sheet-like base material is composed of a core made of a metal layer, a thermal fusion layer formed on one surface of the core, and an insulating film formed on the other surface of the core. The thermal fusion layer may be a modified polypropylene, which is a polymer resin. For example, the thermal fusion layer is formed of CP (Casted Polypropylene) and functions as an adhesive layer, and the insulating film may be formed from a resin material such as nylon or polyethylene terephthalate (PET), but here, the structure and material of the pouch exterior material are not limited. In the sealing portion 320, the thermal fusion layers of the first housing portion 310a and the second housing portion 310b come into contact with each other, and the battery case 300 is sealed by performing a thermal fusion process in a state where they are brought into contact.

The core, the thermal fusion layer, and the insulating film are respectively defined as a metal layer 323, an inner resin layer 322, and an outer resin layer 324 in FIG. 5, and details will be described later in FIG. 5.

The sealing portion 320 may include a first sealing portion 321, a second sealing portion 325 and a third sealing portion 327.

The first sealing portion 321 and the second sealing portion 325 may be sealing portions 320 positioned on both side surfaces (x-axis direction or -x-axis direction) of the battery case 300. The first sealing portion 321 may be an edge of one side of the battery case 300, and the second sealing portion 325 may be an edge of the other side of the battery case 300. The first sealing portion 321 and the second sealing portion 325 may be the sealing portion 320 including an area where the electrode lead 210 is located.

The third sealing portion 327 may be one edge between the first sealing portion 321 and the second sealing portion 325. The third sealing portion 327 may be a sealing portion 320 facing the folding portion 330. The third sealing portion 327 may be one edge of the sealing portion 320 facing the folding portion 330. The third sealing portion 327 may be a sealing portion 320 of an area that does not include the electrode lead 210.

When the sealing portion 320 is completely sealed and then the battery cell 100 is in a high temperature state, the electrolyte solution located inside the battery cell 100 is vaporized, whereby the internal pressure of the battery cell 100 increases, the battery cell 100 swells up and the sealed battery case 300 may be torn. In this case, the battery case 300 is torn and high-temperature particles and gases inside the battery cell 100 may be ejected. In order to impart directionality to the ejected particles and gases, heat may be additionally transferred to the sealing portion 320.

Specifically, referring to FIG. 4, the battery cell 100 according to one embodiment of the present disclosure may receive additional heat transfer from an external heat source. The sealing portion 320 of the battery cell 100 according to one embodiment of the present disclosure may receive additional heat transfer from an external heat source. Preferably, one area of the sealing portion 320 that can receive additional heat transfer from an external heat source is a first area A1, and one area of the sealing portion 320 that does not receive additional heat transfer from an external heat source may be a second area A2.

Specifically, the first area A1 is an area that receives additional heat transfer after completion of the sealing according to FIG. 3. That is, the first area A1 is an area that receives additional heat transfer after the sealing portion is thermally fused and sealed.

The first area A1 may be one area of the sealing portion 320. The first area A1 may be a partial area of the first sealing portion 321, and an area including the second sealing portion 325 and the third sealing portion 327. However, the first area A1 is not limited thereto, and may be a partial area of the second sealing portion 325 and an area including the first sealing portion 321 and the third sealing portion 327. That is, the first area A1 may be an area in which a part of the first sealing portion 321 or the second sealing portion 325 is not sealed, and all other sealing portions 320 than those mentioned above are sealed.

The first area A1 may receive transfer of heat transfer an external heat source after being thermally fused and sealed. The external heat source is not limited as long as it can maintain a certain distance from the battery case 300 and can receive transfer of heat without contacting the battery case 300. For example, the external heat source may be a quartz tube, a carbon heater, a ceramic heater, a halogen lamp, or the like. Preferably, the external heat source may be a halogen lamp that generates heat quickly and does not damage the filament even during long-term operation.

The second area A2 is an area that does not receive additional heat transfer after completion of the sealing according to FIG. 3. That is, the second area A2 is an area that does not receive additional heat transfer after the sealing portion is thermally fused and sealed.

The second area A2 may be one area of the sealing portion 320. According to FIG. 4, the second area A2 may be one area of the first sealing portion 321. However, the second area A2 is not limited thereto, and may be a partial area of the first sealing portion 321 or a partial area of the second sealing portion 325 where the electrode lead 210 is located.

The external heat source may additionally supply heat to the battery cell 100 according to one embodiment of the present disclosure to improve the tensile strength of the sealing portion 320. This may be because crystallization is performed by additionally supplying heat to the sealing portion 320. Preferably, the first area A1 can receive additional heat transfer from an external heat source to promote crystallization. In this case, the first area A1 may be different in the crystallinity as compared with the sealing portion 320 that does not receive additional heat transfer from an external heat source. Specifically, the first area A1 may have a higher crystallinity as compared with the sealing portion 320 that does not receive additional heat transfer from an external heat source.

The crystallinity is the weight fraction of the crystalline portion with respect to the entire crystalline polymer solid, and may mean the crystallinity of the thermal fusion layer forming the battery case 300 in this specification. Specifically, the crystallinity may be the crystallinity of the thermal fusion layer of the battery case 300 after the first area 301 and the second area 302 are thermally fused.

Therefore, in the battery cell 100 according to one embodiment of the present disclosure, when the thicknesses of the first sealing portion 321, the second sealing portion 325 and the third sealing portion 327 are identical to each other, the mechanical properties of the battery cell can be improved as the crystallinity of the thermal fusion layer of the battery case 300 increases. That is, the first area A1, which receives additional heat transfer, may have a higher sealing strength as compared with the second area A2.

In summary, since the first area A1 receives additional heat transfer, the sealing strength of the battery cell 100 can be partially improved. And, when the internal pressure of the battery cell 100 increases due to charge and discharge for the battery, the pouch case of the battery cell 100 may be torn at the second area A2, which has a relatively weak sealing strength compared to the first area A1. That is, when the battery cell 100 is in a high-temperature and high-pressure state, high-temperature particles and gases inside the battery cell 100 can be emitted to the second area A2, thereby imparting directionality to the emission of the particles and gases.

Therefore, after sealing the battery cell 100, one area of the sealing portion 320 can be additionally irradiated with heat to change the crystallinity of the battery case 300, and when the internal pressure of the battery cell 100 increases, the discharge direction of high-temperature particles and gases inside the battery cell 100 can be adjusted. Preferably, high-temperature particles and gases inside the battery cell 100 can be discharged in one direction.

FIG. 5 is a cross-sectional view taken along the line B-B' of FIG. 4.

Referring to FIGS. 4 and 5, the first sealing portion 321 according to one embodiment of the present disclosure may be composed of an inner resin layer 322, a metal layer 323 , and an outer resin layer 324. The inner resin layer 322, the metal layer 323, and the outer resin layer 324 may have configurations corresponding to the thermal fusion layer, the core, and the insulating film described in FIGS. 2 to 4, respectively.

The metal layer 323 may be a metal foil layer that functions as a substrate that maintaining mechanical strength and as a moisture and oxygen barrier layer. For example, the metal layer 323 may be an aluminum layer.

The inner resin layer 322 may be formed on one surface of the metal layer 323. The inner resin layer 322 may be positioned while being in contact with one surface of the metal layer 323.

The inner resin layer 322 may be an adhesive layer made of polyolefins such as polyethylene (PE), casted polypropylene (cPP), or poly propylene (PP), or a copolymer thereof, which sequentially have thermal adhesiveness and function as a sealing agent.

Specifically, the inner resin layer 322 of the first sealing portion 321 may be divided into a third area A3 and a fourth area A4.

The third area A3 may be an area of the inner resin layer 322 that receives additional heat from an external heat source. The fourth area A4 may be an area of the inner resin layer 322 which does not receive additional heat transfer from an external heat source.

The third area A3 receives additional heat transfer from an external heat source, which may cause the inner resin layer 322 to crystallize. Therefore, the crystallinity of the inner resin layer 322 in the third area A3 may be higher than that of the fourth area A4, which is the inner resin layer 322 that do not cause crystallization.

Here, the crystallinity may mean the crystallinity of the inner resin layer 322 forming the sealing portion 320.

And, the third area A3 may be the first area A1 of FIG. 4, and the fourth area A4 may be the second area A2 of FIG. 4. That is, the first area A1 may include the third area A3, and the second area A2 may include the fourth area A4.

Therefore, when the thickness of the third area A3 and the thickness of the fourth area A4 are equal, the mechanical properties of the battery cell can be improved as the crystallinity of the third area A3 increases. That is, compared to the fourth area A4, the third area A3, which receives additional heat transfer after sealing, may have a higher sealing strength.

In summary, as the third area A3 receives additional heat transfer, the sealing strength of the battery cell 100 is partially improved. Thereby, when the internal pressure of the battery cell 100 increases due to charge and discharge of the battery, the fourth area A4, which has a relatively weak sealing strength compared to the third area A3, may be torn. In this case, high-temperature particles and gases inside the battery cell 100 may be emitted to the fourth area A4, which can impart directionality to the emission of the particles and gases.

That is, after sealing the battery cell 100, one area of the sealing portion 320 can be additionally irradiated with heat to change the crystallinity of the inner resin layer 322, and can adjust the discharge direction of high-temperature particles and gases inside the battery cell 100 when the internal pressure of the battery cell 100 increases. Preferably, high-temperature particles and gases inside the battery cell 100 may be discharged in one direction.

The outer resin layer 324 may be formed on the other surface of the metal layer 323. That is, the outer resin layer 324 may be positioned while being in contact with the other surface of the metal layer 323.

The outer resin layer 324 may be formed of a functional polymer film such as a polyethylene terephthalate (PET) resin, a polyethylene naphthalate (PEN), a nylon resin or a liquid crystal polymer (LCP) in order to protect the battery cell from external impact, and may be multilayer structure.

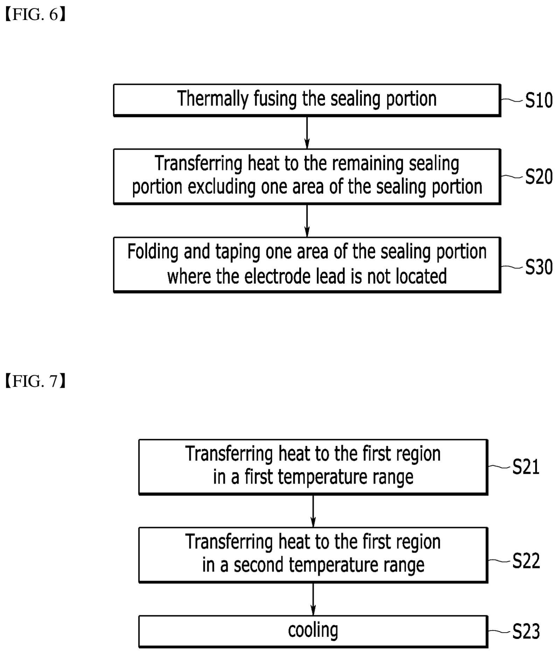

FIG. 6 is a flowchart showing a method of manufacturing a battery cell according to one embodiment of the present disclosure. FIG. 7 is a flowchart illustrating a second step of FIG. 6 in more detail.

Referring to FIG. 6, a method of manufacturing a battery cell according to one embodiment of the present disclosure comprises thermally fusing the sealing portion (S10), transferring heat to the remaining sealing portion excluding one area of the sealing portion (S20), and folding and taping one area of the sealing portion where the electrode lead is not located (S30). Since the battery cell according to one embodiment of the present disclosure is equal to the battery cell described in FIGS. 2 to 5, description of the same configuration will be omitted below, and each process will be described more specifically.

Referring to FIGS. 2, 3 and 6, in the step of thermally fusing the sealing portion (S10), the entire sealing portion 320 including the first sealing portion 321, the second sealing portion 325, and the third sealing portion 327 can be thermally fused to primarily seal the battery case 300.

Referring to FIGS. 4, 6 and 7, in the step of transferring heat to the remaining sealing portion excluding one area of the sealing portion (S20), the first area A1 of the battery cell sealing portion 320 according to one embodiment of the present disclosure may receive additional heat transfer from an external heat source. That is, the inner resin layer 322 forming the first area A1 may receive additional heat transfer from an external heat source. In this case, the material forming the inner resin layer 322 may be melted by additional heat and then hardened again, thereby promoting crystallization.

Specifically, referring to FIGS. 6 and 7, the step of transferring heat to the remaining sealing portion excluding one area of the sealing portion (S20) may further comprise transferring heat to the first region in a first temperature range (S21), transferring heat to the first region in a second temperature range (S22), and cooling it (S23).

More specifically, in the step of transferring heat to the first region in a first temperature range (S21), the first area may be heated to 140°C to 160°C for 1 minute. In the step of transferring heat to the first region in a second temperature range (S22), the first area may be heated to 100°C to 120°C for 1 minute. That is, the first temperature range may be 140°C to 160°C, the second temperature range may be 100°C to 120°C, and the first temperature range may be higher than the second temperature range.

In the cooling step (S23), the battery cell may be cooled at 20°C to 25°C. The above steps applies heat to the first area A1 for about 1 minute to strengthen the mechanical properties of the battery cell sealing portion 320, and then cures the inner resin layer 322. In the case of progressing the cooling, the cooling temperature and time are not limited.

For example, polypropylene forming the inner resin layer 322 of the first area melts at 160°C, and hardens from 120°C to progress crystallization. At this time, when the polypropylene hardens at the slowest speed possible, the size of the crystal increases. And, as the size of the crystal increases, the crystallinity increases, thereby improving the mechanical strength of the battery case 300. Therefore, if the inner resin layer 322 containing polypropylene for 1 minute is heated and melted so as to have a first temperature range of 140°C to 160°C, and then the inner resin layer 322 is cooled between 120°C and 100°C, the crystallization of polypropylene progresses by slowly hardening while transferring heat to the polypropylene for another 1 minute, such that the second temperature range of 120°C to 100° C is maintained for a period of time.

After progressing the step of transferring heat to the first region in a first temperature range (S21), and the step of transferring heat to the first region in a second temperature range (S22), the cooling is progressed at room temperature.

In the step of folding and taping one area of the sealing portion where the electrode lead is not located (S30), the third sealing portion 327, which is an area of the sealing portion 320 where the electrode lead 210 is not located, is folded and taped. In this method, the sealing portion 320 where the electrode lead 210 is not located is folded and taped for double sealing. That is, the sealing portion 320 of the battery case 300 receives additional heat transfer, thereby improving the mechanical rigidity of the battery cell 100. The third sealing portion 327 is further double-folded and taped to adjust so that gases and particles discharged when the internal pressure of the battery cell 100 increases are vented only in one direction. Therefore, by performing the above steps, in the step of transferring heat to the remaining sealing portion excluding one area of the sealing portion (S20), the gas can be completely vented only to the second area A2 which does not receive additional heat transfer.

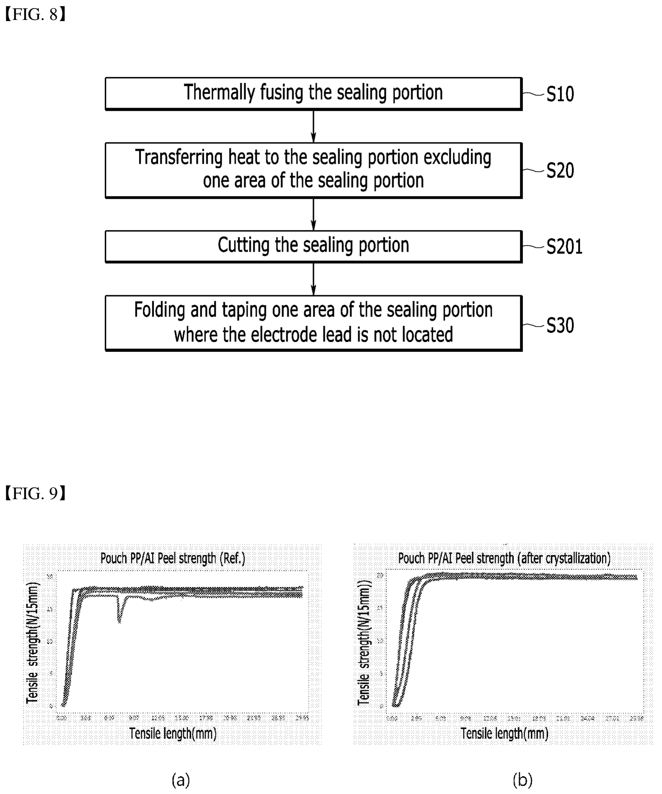

FIG. 8 is a flowchart showing that a step of cutting the sealing portion is further included in FIG. 6.

Referring to FIG. 8, the method further comprises cutting the seal portion (S201) after the step of transferring heat to the sealing portion excluding one area of the sealing portion (S20).

In the step of cutting the sealing portion (S201), the edge of the sealing portion 320 is cut for the battery cell 100 that has been completely sealed through the step of thermally fusing the sealing portion (S10) and the step of transferring heat to the sealing portion excluding one area of the sealing portion (S20). Consequently, the width of the sealing portion 320 can be reduced. Preferably, the width of the sealing portion 320 can be reduced by about half due to cutting.

Due to the addition of the step of cutting the sealing portion (S201), the size of the battery cell 100 can be reduced compared to the case without the above steps. Thereby, more battery cells 100 can be stacked and housed in a battery module or battery pack, and the energy density of the battery can be increased.

FIG. 9(a) is a diagram showing the peel strength of a conventional battery cell, and FIG. 9(b) is a diagram showing the peel strength of the battery cell according to one embodiment of the present disclosure.

Referring to FIG. 9, it can be seen that a battery cell according to one embodiment of the present disclosure, in which the sealing portion sealed by thermal fusion is further irradiated with heat and then hardened to progress crystallization, has improved tensile strength and peel strength compared to conventional battery cells sealed only by thermal fusion. That is, due to the crystallization of the sealing portion, the mechanical properties of the battery cell are improved.

Specifically, referring to FIG. 9, it can be seen that the conventional battery cell has a tensile strength of about 18 N/15 mm when the tensile length is greater than or equal to a certain value. On the other hand, it can be seen that the battery cell according to one embodiment of the present disclosure in which crystallization has progressed has a tensile strength of about 20 N/15 mm when the tensile length is greater than or equal to a certain value.

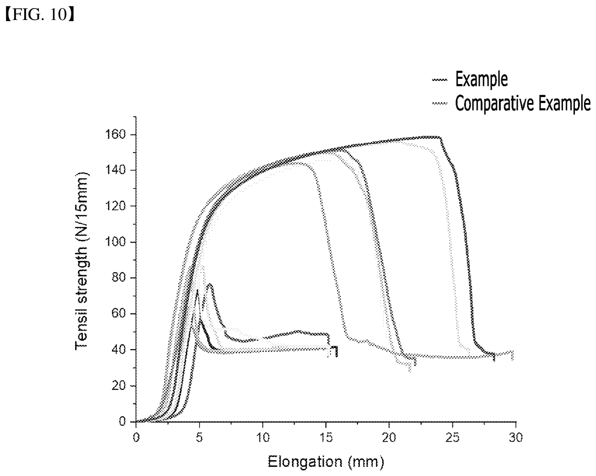

FIG. 10 is a graph showing the tensile strength of a conventional battery cell and a battery cell according to one embodiment of the present disclosure.

Referring to FIG. 10, it can be seen that when no additional heat is applied after sealing the sealing portion of the battery cell, the tensile strength of Example to which additional heat is applied is much higher than that of Comparative Example.

Specifically, in the case of Comparative Example, the maximum tensile strength is about 90 N/15 mm, but in the case of Example, the maximum tensile strength is about 160 N/15 mm, confirming that the tensile strength of Example is greater than that of Comparative Example.

However, it can be seen that both Comparative Example and Example have a tensile strength of about 40 N/15 mm at a certain elongation length or more. This may be because the battery case breaks when the elongation length exceeds a certain length.

Referring to Table 1 showing the graph of FIG. 10 with specific numerical values, it is possible to know more specifically about the above results.

**[Table 1]**

| | First Comparative Example | | First Experimental Example | |
|---|---|---|---|---|
| Tensile strength | N/*mm*² | Kgf/*mm*² | N/*mm*² | Kgf/*mm*² |
| Min | 41.60 | 4.24 | 116.75 | 11.91 |
| Max | 53.27 | 5.44 | 120.03 | 12.25 |
| Ave. | 47.43 | 4.84 | 119.01 | 12.14 |
| Number of spec. out sample | 1/6 | | 0/6 | |

Table 1 is a table showing the tensile strength of battery cases according to Comparative Example and Example. Specifically, Table 1 shows the tensile strength of a conventional battery cell as a first comparative example, and the tensile strength of a battery cell according to one embodiment of the present disclosure as a first experimental example.

In both the first comparative example and the first experimental example, the battery case is sealed at 200°C and 0.1 MPa for 1.8 seconds. Specifically, the first comparative example is a battery cell without additional sealing after sealing under the above conditions, and the first experimental example is a battery cell that is sealed under the above conditions and then receives additional heat transfer to the sealing portion for 60 seconds at a frequency of 45 khz.

Referring to Table 1, it can be seen that the tensile strength of the fist experimental example 1 is significantly higher than that of the first comparative example. Specifically, it can be seen that the tensile strength of the first experimental example is about 2 to 3 times higher than that of the first comparative example, preferably 2.2 to 2.9 times higher.

More specifically, the tensile strength of the first experimental example represents the tensile strength of the first area that received additional heat transfer after sealing the battery case by thermal fusion, and the difference in tensile strength between the first comparative example and the first experimental example may correspond to the difference in tensile strength between the second area of the first experimental example and the first area of the first experimental example. Therefore, it can be seen that the tensile strength of the first area is about 2 to 3 times higher than that of the second area, preferably 2.2 to 2.9 times higher.

In addition, the first comparative example shows spec. out samples, but the first experimental example shows no number of spec. out samples, which may be due to enhancement of tensile strength.

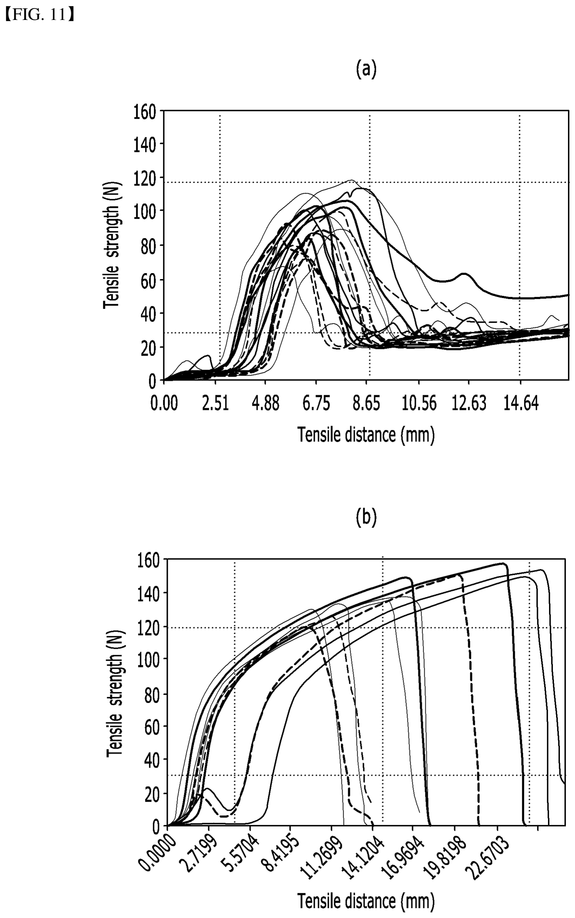

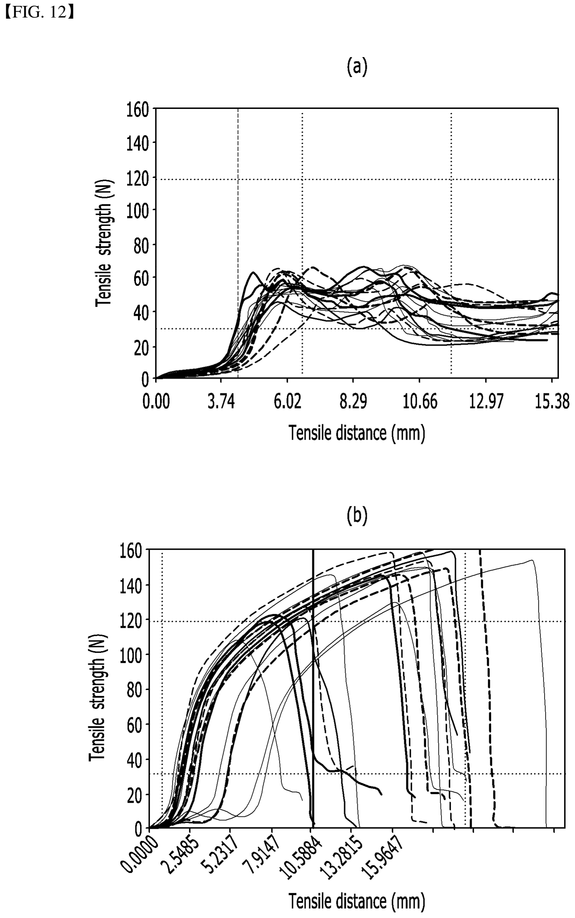

FIG. 11(a) is a diagram showing the tensile strength of the cathode of a conventional battery cell, and FIG. 11(b) is a diagram showing the tensile strength of the cathode of the battery cell according to one embodiment of the present disclosure. FIG. 12(a) is a diagram showing the tensile strength of the anode of the conventional battery cell, and FIG. 12(b) is a diagram showing the tensile strength of the anode of the battery cell according to one embodiment of the present disclosure.

Referring to FIGS. 11 and 12, it can be seen that the tensile strength of the battery cell according to one embodiment of the present disclosure is greater than that of conventional battery cells. That is, according to the above data, the tensile strength and sealing strength of the battery cell according to one embodiment of the present disclosure, in which additional heat is irradiated to the sealing portion after thermal fusion and then crystallization is progressed, are much higher than those of conventional battery cells in which the sealing portion is simply sealed only by thermal fusion. From this, it can be seen that mechanical properties such as tensile strength and sealing strength of the battery cell are improved with the progress of crystallization in the sealing portion.

Referring to Tables 2 and 3 showing the graphs of FIGS. 11 and 12 with specific numerical values, it is possible to know more specifically about the above results.

**[Table 2]**

| Second Comparative Example | | Second Experimental Example | |
|---|---|---|---|
| Minimum value | 30.97 N/mm² | Minimum value | 92.88 N/mm² |
| Maximum value | 85.51 N/mm² | Maximum value | 101.44 N/mm² |
| Average value | 51.37 N/mm² | Average value | 97.76 N/mm² |

**[Table 3]**

| Third Comparative Example | | Third Experimental Example | |
|---|---|---|---|
| Minimum value | 28.62 N/mm² | Minimum value | 73.06 N/mm² |
| Maximum value | 53.99 N/mm² | Maximum value | 115.91 N/mm² |
| Average value | 42.95 N/mm² | Average value | 99.65 N/mm² |

Table 2 shows the tensile strength of the cathode of a conventional battery cell as a second comparative example, and the tensile strength of the cathode of a battery cell according to one embodiment of the present disclosure as a second experimental example. Table 3 shows the tensile strength of the anode of the conventional battery cell as a third comparative example, and the tensile strength of the anode of the battery cell according to one embodiment of the present disclosure as a third experimental example.

Specifically, the second experimental example and the third experimental example of Tables 2 and 3 represent the tensile strength when additional heat is applied to the sealing portion for 60 seconds at a frequency of 45 kHz. Also, referring to Tables 2 and 3, it can be seen that the tensile strength of the second experimental example and the third experimental example is significantly higher than that of the second comparative example and the third comparative example. However, it can be seen that the difference between the tensile strengths of the second experimental example and the third experimental example is not significant, which may be because the cathode or the anode breaks above a certain value if the crystallinity continues to increase. Therefore, even if heat is continuously supplied to the sealing portion, the crystallinity may not increase beyond a certain value.

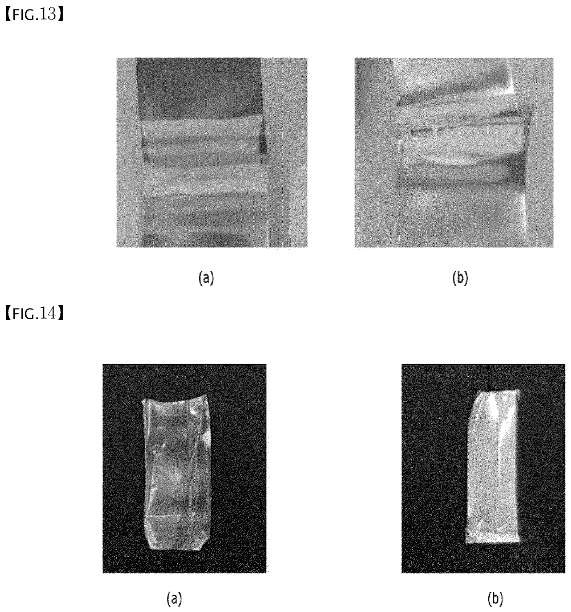

FIG. 13(a) is an image showing Comparative Example in which force having a certain value or more is applied to the battery case, and FIG. 13(b) is an image showing one embodiment in which force having a certain value or more is applied to the battery case.

Referring to FIG. 13(a), it can be seen that in the case of Comparative Example in which additional heat is not irradiated to the sealing portion after sealing, the sealing portion of the battery case is stretched without being broken even when a force having a certain value or more is applied to the battery case. At this time, it can be seen that the battery case is in a transparent state.

On the other hand, referring to FIG. 13(b), it can be seen that in the case of Example in which additional heat is irradiated to the sealing portion after sealing, partial breakage is observed in the sealing portion of the battery case when force having a certain value or more is applied to the battery case. At this time, it can be seen that the battery case is in an opaque state.

This is because the thermal fusion layer forming the battery case receives additional heat transfer, thereby increasing the crystallized section of the thermal fusion layer. That is, since the crystals formed in the thermal fusion layer form a broken surface, partial breakage occurs, and since the crystal scatters light, the sealing portion of the battery case is in an opaque state.

This can be known in more detail with reference to FIG. 14 described below.

FIG. 14 is an image showing the inner resin layer of the battery case of Comparative Example and Example. FIG. 14(a) is an image showing an inner resin layer of a battery case of Comparative Example in which additional heat is not irradiated to the sealing portion after sealing, and FIG. 14(b) is an image showing the inner resin layer of the battery case of one embodiment of the present disclosure in which additional heat is irradiated to the sealing portion after sealing.

Specifically, in Comparative Example and Example of FIG. 14, after measuring the tensile strength of the battery case, the inner resin layer inside the broken battery case is taken, and then the crystallization degrees thereof are compared.

As described in FIG. 13, as the crystallization of the inner resin layer progresses, a whitening phenomenon that appears opaque may occur. Referring to FIG. 14, it can be seen that the inner resin layer of FIG. 14(b), which is Example, is opaque compared to FIG. 14(a), which is Comparative Example.

Therefore, it can be seen that the tensile strength and sealing strength of the battery case of Example which receives additional heat transfer to the sealing portion are increased compared to Comparative Example.

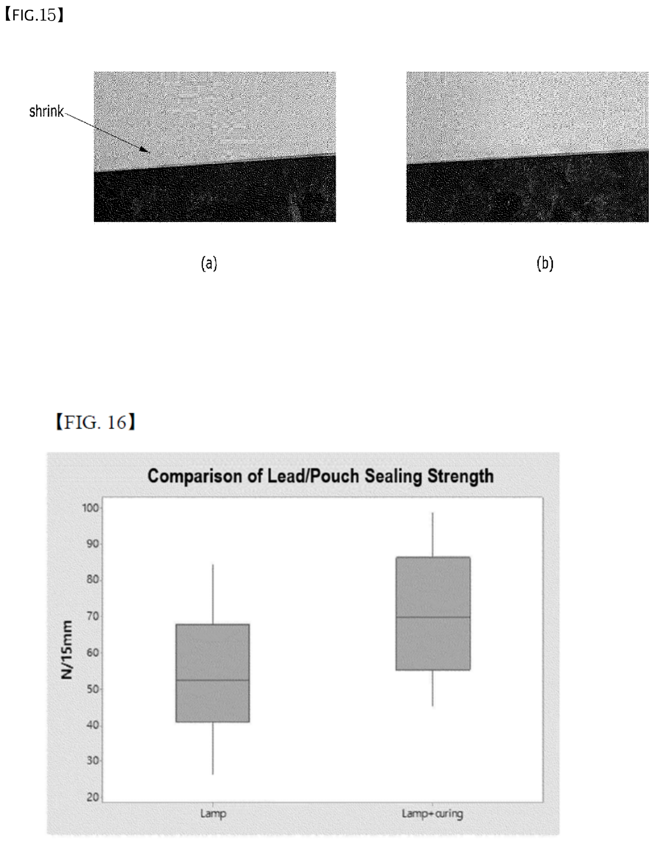

FIG. 15 is an image showing the outer resin layer of the battery case of Comparative Example and Example. FIG. 15 (a) is an image showing an outer resin layer of a battery case in which additional heat is irradiated to the sealing portion after sealing; and FIG. 15(b) is an image showing an outer resin layer of a battery case in which relatively lower heat than in the battery cell of FIG. 15(a) is additionally irradiated after sealing.

More specifically, it can be seen that the battery case of FIG. 15(a) is locally exposed to a temperature of 210°C or more, and the battery case of FIG. 15(b) is exposed to a lower temperature than the battery case of FIG. 15(a).

In this case, referring to FIG. 15(a), the outer resin layer of the battery case may cause a shrinkage phenomenon due to a temperature of 210°C or more. In contrast, it can be seen that the outer resin layer of the battery case of FIG. 15 (b) does not cause a shrinkage phenomenon. The temperature range in which damage to the outer resin layer does not occur may be a temperature of 210°C or less, and preferably may be a temperature of 160°C or less.

Therefore, as described in FIGS. 6 and 7, it may be desirable to set the temperature range for sealing the sealing portion of the battery cell to 160°C or less.

FIG. 16 is a diagram showing the sealing strength of a conventional battery cell and a battery cell according to one embodiment of the present disclosure.

Referring to FIG. 16, it can be seen that the sealing strength of the conventional battery cell is about 40 N/15 mm to about 70 N/15 mm, whereas the sealing strength of the battery cell according to one embodiment of the present disclosure is about 55 N/15 mm to about 87 N/15 mm.

Therefore, according to the above data, it can be seen that the tensile strength and sealing strength of the battery cell according to one embodiment of the present disclosure, in which additional heat is irradiated to the sealing portion after thermal fusion and then crystallization progressed, are much higher than those of conventional battery cells sealed only by thermal fusion. This may be because mechanical properties such as tensile strength and sealing strength of the battery cell are improved due to the progress of crystallization in the sealing portion.

**[Table 4]**

| Category | Thickness of first sealing portion (µm) | Thickness of second sealing portion (µm) | Pressure resistance strength (bar) | Average pressure resistance strength (bar) |
|---|---|---|---|---|
| Fourth Experimental Example | 936 | 635 | 6.3 | 7.2 |
| | | | 7.4 | |
| | | | 7.9 | |
| Fifth Experimental Example | 916 | 614 | 7.3 | 7.2 |
| | | | 6.9 | |
| | | | 7.4 | |
| Sixth Experimental Example | 694 | 599 | 5.3 | 5.5 |
| | | | 6.1 | |
| | | | 5.1 | |

Table 4 shows the pressure resistance with respect to the thickness difference of the sealing portion of the battery cell according to one embodiment of the present disclosure.

Specifically, Table 4 is a table showing that when the same amount of heat is applied to the sealing portion of each experimental example to set the crystallinity to be the same, and only the thickness difference of the sealing portion is different, the mechanical properties of the battery cells differ. That is, Table 4 is a table in which air is injected into the battery cell at a rate of 50 cc/min for each experimental example in which the thickness of the sealing portion is formed to be different, and the pressure when the battery cell is torn thereby is measured.

In each experimental example, the first sealing portion may be a sealing portion where the cathode is located, and the second sealing portion may be a sealing portion where the anode is located.

According to Table 4, it can be seen that in the case of the fourth experimental example and the fifth experimental example, in which there is almost no difference in thickness between the first sealing portion and the second sealing portion, the average pressure resistance strength does not make difference by about 7.2 bar, but in the case of the sixth experimental example, in which the thickness of each of the first sealing portion and the second sealing portion is relatively small, the average pressure resistance strength is as low as 5.5 bar.

As a result, even if additional heat is applied to the sealing portion to progress crystallization, the mechanical properties improve as the thickness of the sealing portion increases, if the degree of crystallinity is equal.

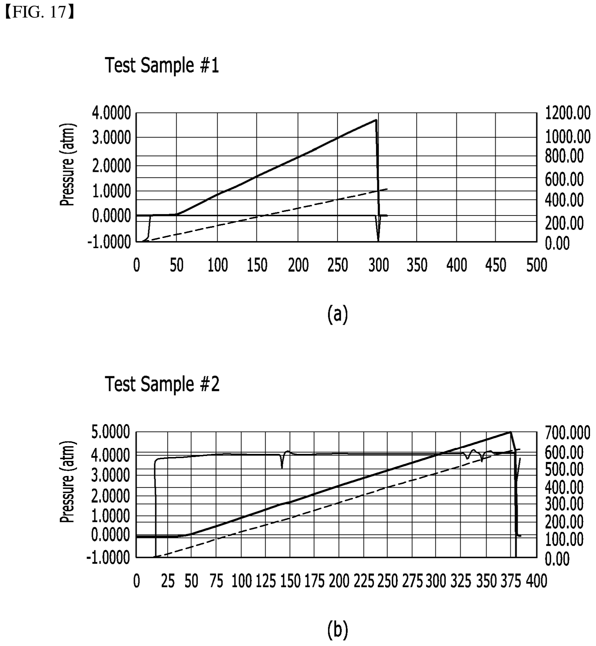

FIG. 17(a) is a diagram showing the pressure when the pouch of a conventional battery cell is torn, and FIG. 17(b) is a diagram showing the pressure when the pouch of the battery cell according to one embodiment of the present disclosure is torn. Table 5 is a table showing directions when the battery case of FIG. 17 is torn.

**[Table 5]**

| | Direction of first sealing portion | Direction of second sealing portion | Direction of third sealing portion |
|---|---|---|---|
| Fourth Comparative Example | 4 | 2 | 1 |
| Seventh Experimental Example | 7 | 0 | 0 |

Referring to FIG. 17(a) and Table 5, it can be seen that when the internal pressure applied to the fourth comparative example, which is a conventional battery cell, is 3.5 atm to 4.5 atm, the conventional battery case is torn without directivity. Specifically, according to the experimental results, 4 of 7 battery cases are torn in the direction of the first sealing portion in FIG. 4, and 2 of 7 battery cases are torn in the direction of the second sealing portion, and one of 7 battery cases is torn in the direction of the third sealing portion.

On the other hand, referring to FIG. 17(b) and Table 5, it can be seen that when the internal pressure applied to the seventh experimental example, which is a battery cell according to one embodiment of the present disclosure, is 4.0 atm to 5.5 atm, the battery case according to one embodiment of the present disclosure is torn in one direction. Specifically, according to the experimental results, it can be seen that 7 of 7 battery cases are torn in the direction of the first sealing portion in FIG. 4. In this case, the sixth experimental example, which is a battery cell according to one embodiment of the present disclosure, is a battery in which the first area is formed in the second sealing portion and the third sealing portion, and the second area is in the first sealing portion.

Further, referring to the above experimental data, it can be seen that since the magnitude of the internal pressure applied to the seventh experimental example is greater than that of the fourth comparative example, additional heat is applied to the sealing portion to improve the crystallinity, thereby increasing the peel strength and pressure resistance strength of the battery case. In addition, by adjusting the position where additional heat is applied to the sealing portion, the direction in which the battery case is torn at a certain pressure or more can be adjusted.

In summary, based on the above description of the battery cell according to one embodiment of the present disclosure and the experimental data on Comparative examples and Examples, it can be seen that the crystallinity of the sealing portion of the battery cell according to one embodiment of the present disclosure, in which additional heat is irradiated after sealing, is increased compared to the conventional battery cell. As a result, the tensile strength and sealing strength of the battery cell sealing portion are improved, so that the venting direction of particles and hot gas discharged from the battery cell can be controlled, and the effect of improving the durability and safety of the battery can be derived.

The above-mentioned battery cell, a battery module and battery cell including the same can be applied to various devices. Such devices can be applied to a vehicle means such as an electric bicycle, an electric vehicle, or a hybrid vehicle, but the present disclosure is not limited thereto, and is applicable to various devices that can use a battery module and a battery pack including the same, which is also falls under the scope of the present disclosure.

Although the invention has been illustrated and described above with reference to preferred embodiments thereof, the scope of the present disclosure is not limited thereto, and numerous other variations and modifications can be made by those skilled in the art, without departing from the spirit and scope of the principles of the invention described in the appended claims.

### [Description of Reference Numerals]

100: battery cell
200: electrode assembly
210: electrode lead
300: battery case
320: sealing portion
321: first sealing portion
322: inner resin layer
323: metal layer
324: outer resin layer
325: second sealing portion
327: third sealing portion
330: folding portion
A1: first area
A2: second area
Preferred embodiments of the Invention are specified in the following items:

### [Item 1]

A battery cell comprising:
an electrode assembly including a cathode, an anode and a separator; and
a battery case including a sealing portion that houses the electrode assembly and seals an outer periphery of the electrode assembly,
wherein the sealing portion includes a first area, and a second area excluding the first area, and
wherein the first area is an area where the crystallinity of the battery case is higher than that of the second area.

### [Item 2]

The battery cell of Item 1, wherein:
the sealing portion includes a first sealing portion and a second sealing portion respectively located on both sides of the battery case, and a third sealing portion that is one edge between the first sealing portion and the second sealing portion.

### [Item 3]

The battery cell of Item 2, wherein:
the first area comprises,
the first sealing portion excluding a partial area of the first sealing portion and the second sealing portion, or the first sealing portion and the second sealing portion excluding a partial area of the second sealing portion; and
the third sealing portion.

### [Item 4]

The battery cell of Item 3, wherein:
the second area is a partial area of the first sealing portion or a partial area of the second sealing portion.

### [Item 5]

The battery cell of Item 1, wherein:
when the pressure inside the battery cell is equal to or higher than a certain pressure, the second area is torn.

### [Item 6]

The battery cell of Item 1, wherein:
the sealing portion includes a metal layer, an inner resin layer formed on one surface of the metal layer, and an outer resin layer formed on the other surface of the metal layer,
the inner resin layer includes a third area, and a fourth area excluding the third area, and
the third area is an area where the crystallinity of the battery case is higher than that of the fourth area.

### [Item 7]

The battery cell of Item 6, wherein:
the third area is an area where the crystallinity of the inner resin layer is higher than that of the fourth area.

### [Item 8]

The battery cell of Item 6, wherein:
the first area includes the third area, and
the second area includes the fourth area.

### [Item 9]

A battery cell comprising:
an electrode assembly including a cathode, an anode and a separator; and
a battery case including a sealing portion that houses the electrode assembly and seals an outer periphery of the electrode assembly,
wherein the sealing portion includes a first area, and a second area excluding the first area, and
wherein the first area is an area where the tensile strength of the battery case is higher than that of the second area.

### [Item 10]

The battery cell of Item 9, wherein:
the tensile strength of the first area is 2 to 3 times higher than the tensile strength of the second area.

### [Item 11]

The battery cell of Item 10, wherein:
the tensile strength of the first area is 2.2 to 2.9 times higher than the tensile strength of the second area.

### [Item 12]

A method of manufacturing a battery cell which comprises an electrode assembly including a cathode, an anode and a separator; and a battery case including a sealing portion that houses the electrode assembly and seals an outer periphery of the electrode assembly, the method comprising:
thermally fusing the sealing portion; and
transferring heat to the remaining sealing portion excluding one area of the sealing portion,
wherein the remaining sealing portion excluding one area of the sealing portion is a first area.

### [Item 13]

The method of Item 12, wherein:
in the transferring heat to the remaining sealing portion excluding one area of the sealing portion, the first area is an area that receives additional heat transfer from an external heat source.

### [Item 14]

The method of Item 13, wherein:
the external heat source maintains a certain distance from the battery case and transfers heat without contacting the battery case.

### [Item 15]

The method of Item 14, wherein:
the external heat source is one of a quartz tube, a carbon heater, a ceramic heater, and a halogen lamp.

### [Item 16]

The method of Item 12, wherein:
the transferring heat to the remaining sealing portion excluding one area of the sealing portion further comprises,
transferring heat to the first area in a first temperature range;
transferring heat to the first area in a second temperature range; and
cooling it.

### [Item 17]

The method of Item 16, wherein:
the first temperature range is higher than the second temperature range.

### [Item 18]

The method of Item 16, wherein:
the transferring heat to the first area in a first temperature range heats the first area to 140°C to 160°C for 1 minute.

### [Item 19]

The method of Item 16, wherein:
the transferring heat to the first area in a second temperature range heats the first area to 100°C to 120°C for 1 minute.

### [Item 20]

The method of Item 16, wherein:
the cooling cools the battery cell at 20°C to 25°C.

### [Item 21]

The method of Item 12,
further comprising cutting the sealing portion.

### [Item 22]

The method of Item 12,
further comprising folding and taping one area of the sealing portion where the electrode lead protruding from the electrode assembly is not located.

## Claims

1. A battery cell comprising:
an electrode assembly including a cathode, an anode and a separator; and
a battery case including a sealing portion that houses the electrode assembly and seals an outer periphery of the electrode assembly,
wherein the sealing portion includes a first area, and a second area excluding the first area,
wherein the first area is an area where the crystallinity of the battery case is higher than that of the second area,
wherein the sealing portion includes a first sealing portion and a second sealing portion respectively located on both sides of the battery case, and a third sealing portion that is one edge between the first sealing portion and the second sealing portion, and
wherein the first sealing portion and the second sealing portion are the sealing portions including an area where the electrode lead is located.

2. The battery cell of claim 1, wherein:
the first area comprises,
the first sealing portion excluding a partial area of the first sealing portion and the second sealing portion, or the first sealing portion and the second sealing portion excluding a partial area of the second sealing portion; and
the third sealing portion; and
the second area is a partial area of the first sealing portion or a partial area of the second sealing portion.

3. The battery cell of claim 1, wherein:
when the pressure inside the battery cell is equal to or higher than a certain pressure, the second area is torn.

4. The battery cell of claim 1, wherein:
the sealing portion includes a metal layer, an inner resin layer formed on one surface of the metal layer, and an outer resin layer formed on the other surface of the metal layer,
the inner resin layer includes a third area, and a fourth area excluding the third area, and
the third area is an area where the crystallinity of the battery case is higher than that of the fourth area.

5. The battery cell of claim 4, wherein:
the third area is an area where the crystallinity of the inner resin layer is higher than that of the fourth area.

6. The battery cell of claim 4, wherein:
the first area includes the third area, and
the second area includes the fourth area.

7. A battery cell comprising:
an electrode assembly including a cathode, an anode and a separator; and
a battery case including a sealing portion that houses the electrode assembly and seals an outer periphery of the electrode assembly,
wherein the sealing portion includes a first area, and a second area excluding the first area, and
wherein the first area is an area where the tensile strength of the battery case is higher than that of the second area.

8. The battery cell of claim 7, wherein:
the tensile strength of the first area is 2 to 3 times higher than the tensile strength of the second area.

9. A method of manufacturing a battery cell which comprises an electrode assembly including a cathode, an anode and a separator; and a battery case including a sealing portion that houses the electrode assembly and seals an outer periphery of the electrode assembly, the method comprising:
thermally fusing the sealing portion; and
transferring heat to the remaining sealing portion excluding one area of the sealing portion,
wherein the remaining sealing portion excluding one area of the sealing portion is a first area,
wherein the sealing portion includes a first sealing portion and a second sealing portion respectively located on both sides of the battery case, and a third sealing portion that is one edge between the first sealing portion and the second sealing portion, and
wherein the first sealing portion and the second sealing portion are the sealing portions including an area where the electrode lead is located.

10. The method of claim 9, wherein:
in the transferring heat to the remaining sealing portion excluding one area of the sealing portion, the first area is an area that receives additional heat transfer from an external heat source, and
the external heat source maintains a certain distance from the battery case and transfers heat without contacting the battery case.

11. The method of claim 10, wherein:
the external heat source is one of a quartz tube, a carbon heater, a ceramic heater, and a halogen lamp.

12. The method of claim 9, wherein:
the transferring heat to the remaining sealing portion excluding one area of the sealing portion further comprises,
transferring heat to the first area in a first temperature range;
transferring heat to the first area in a second temperature range; and
cooling it.

13. The method of claim 12, wherein:
the first temperature range is higher than the second temperature range.

14. The method of claim 9,
further comprising cutting the sealing portion, and
folding and taping one area of the sealing portion where the electrode lead protruding from the electrode assembly is not located.
